(19) **Europäisches Patentamt / European Patent Office / Office européen des brevets**

(11) **EP 3 975 538 A1**

(12) # EUROPEAN PATENT APPLICATION
published in accordance with Art. 153(4) EPC

(43) Date of publication:
**30.03.2022 Bulletin 2022/13**

(21) Application number: **20815704.0**

(22) Date of filing: **14.10.2020**

(51) International Patent Classification (IPC):
**H04N 5/225** (2006.01)      **G02B 13/00** (2006.01)
**G02B 13/08** (2006.01)

(52) Cooperative Patent Classification (CPC):
**G02B 13/08; G02B 13/0015; G02B 13/0065;
G03B 30/00; G03B 37/06; H04M 1/0264;
H04N 5/2254**

(86) International application number:
**PCT/CN2020/120801**

(87) International publication number:
**WO 2022/032855 (17.02.2022 Gazette 2022/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.08.2020   CN 202010822456
30.09.2020   CN 202011070143**

(71) Applicant: **GUANGDONG SIRUI OPTICAL CO., LTD**
**Zhongshan, Guangdong 528458 (CN)**

(72) Inventors:
• **LI, Jie**
  **Zhongshan, Guangdong 528458 (CN)**
• **WU, Wei**
  **Zhongshan, Guangdong 528458 (CN)**

(74) Representative: **Lavoix**
**Bayerstraße 83**
**80335 München (DE)**

(54) ## MOBILE TERMINAL HAVING BUILT-IN ANAMORPHIC LENS

(57)   The present application discloses a mobile terminal with an inbuilt anamorphic lens, the mobile terminal is provided with a widescreen anamorphic lens which comprises a cylindrical lens group and a spherical lens group, the cylindrical lens group at least comprises a group of cylindrical negative optical power lenses and a group of cylindrical positive optical power lenses. A widescreen anamorphic lens is arranged in the mobile terminal. The optical characteristics of the cylindrical lens in the widescreen anamorphic lens are utilized to "compress" the incident light entering horizontally while keeping the incident light entering vertically unchanged, so the widescreen anamorphic lens can compress a widescreen image into a standard image area. After the compressed picture taken by the widescreen anamorphic lens is deformed and corrected by the image correction module, widescreen images and videos can be obtained, meeting the needs of users for widescreen shooting by the mobile terminal.

Fig. 3

**Description**

**TECHNICAL FIELD**

The present application relates to the technical field of mobile phone lenses, specifically to a mobile terminal with an inbuilt anamorphic lens.

**BACKGROUND**

More and more inbuilt cameras are applied to mobile phones. The mainstream flagship mobile phones on the market have inbuilt wide-angle cameras, ultra-wide-angle cameras, telephoto cameras, and macro cameras. With the development of future technology and demand, it is undoubtedly a necessity to use mobile phones to take widescreen pictures and videos conveniently and fast, which is impossible for the existing software and hardware on a mobile phone.

**SUMMARY**

Therefore, the technical problem to be solved by the present application is how to overcome the defect that the inbuilt lens on a mobile phone in prior arts cannot perform widescreen shooting function, so as to provide a mobile terminal with an inbuilt anamorphic lens.

In order to solve the above technical problem, the technical solution of the present application is as follows:

a mobile terminal with an inbuilt anamorphic lens, the mobile terminal is provided with a widescreen anamorphic lens; the widescreen anamorphic lens comprise a cylindrical lens group and a spherical lens group, the cylindrical lens group at least comprises a group of cylindrical negative optical power lenses and a group of cylindrical positive optical power lenses.

Further, the cylindrical lens group and the spherical lens group are successively arranged from an object side to an image side along an optical axis.

Further, the cylindrical lens group comprises a first lens, a second lens and a third lens successively arranged from an object side to an image side along an optical axis; the first lens and the second lens are a cylindrical negative optical power lens, and the third lens is a cylindrical positive optical power lens.

Further, the spherical lens group comprises at least four aspherical lenses.

Further, and the spherical lens group comprises a fourth lens, a fifth lens, a sixth lens and a seventh lens arranged from the object side to the image side along the optical axis; and each of the fourth lens, the fifth lens, the sixth lens and the seventh lens is an even aspheric lens.

Further, an inflection element is provided between the cylindrical lens group and the spherical lens group, and located on a light path of incident light through the cylindrical lens group, for inflecting the incident light to the spherical lens group.

Further, a mechanical center line of the cylindrical lens group is perpendicular to a mechanical center line of the spherical lens group.

Further, the inflection element is a triangular prism, a flat mirror or a pentagonal prism.

Further, the widescreen anamorphic lens has a deformation coefficient ranging from 1.33 to 2.0.

Further, the widescreen anamorphic lens has a thickness of not more than 12mm

Further, the widescreen anamorphic lens is built in the mobile terminal.

Further, the mobile terminal is a mobile phone or a tablet.

The technical solution of the present application has the following advantages:

1. In the mobile terminal with an inbuilt anamorphic lens provided by the present application, a small widescreen anamorphic lens is arranged on the mobile terminal, and the optical characteristics of the cylindrical lens group composed of at least a group of cylindrical negative optical power lenses and a group of cylindrical positive optical power lenses in the widescreen anamorphic lens are utilized to "compress" the incident light entering the cylindrical lens group horizontally while allowing the incident light entering the cylindrical lens group vertically to remain unchanged, therefore, the widescreen anamorphic lens can compress a widescreen image into a standard image area. After the compressed picture taken by the widescreen anamorphic lens is deformed and corrected by the image correction module, the mobile terminal can shoot widescreen images and videos, meeting the needs of users for widescreen shooting by the mobile terminal.

2. In the mobile terminal with an inbuilt anamorphic lens provided by the present application, the widescreen anamorphic lens uses the optical characteristics of the cylindrical lens group composed of three cylindrical lenses to "compress" the incident light that enters horizontally, while the incident light that enters vertically remains unchanged, then the incident light undergoes comprehensive correction by the spherical lens group, thereby increasing the field of view of the lens during horizontal shooting, so that the actual aspect ratio of a shoot screen becomes larger, realizing the function of widescreen photos and videos.

3. In the mobile terminal with an inbuilt anamorphic lens provided by the present application, the inflection element arranged between the cylindrical lens group and the spherical lens group of the widescreen anamorphic lens can change the direction of the light path, so that the cylindrical lens group and the spherical lens group can be arranged in a non-linear manner, such as a periscope typed "L" shape, which is conducive to installing the widescreen anamorphic lens on the mobile terminal.

**BRIEF DESCRIPTION OF THE DRAWINGS**

In order to more clearly describe the specific implementation of the present application or the technical solution in the prior art, drawings that need to be used in the description of the specific implementation or the prior art will be briefly introduced as follows. Obviously, the following described drawings are some implementations of the present application. For those of ordinary skill in the art, other drawings can be obtained according to these drawings without creative work.

Fig. 1 is a schematic diagram of the back of a mobile phone with a widescreen anamorphic lens built therein in embodiment 1 of the present application;

Fig. 2 is a cross-sectional view of the side of a mobile phone with a widescreen anamorphic lens built therein in embodiment 1 of the present application;

Fig. 3 is a schematic diagram of the structure of a lens group in embodiment 1 of the present application;

Fig. 4 is an optical path diagram of the lens group in embodiment 1 of the present application;

Fig. 5 is the optical distortion curve of the lens group in embodiment 1 of the present application, with the abscissa denoting a distortion percentage, and the ordinate denoting an angle of visual field;

Fig. 6 is a modulation transfer function (MTF) curve of the lens group in embodiment 1 of the present application, with the abscissa denoting a spatial frequency, and the ordinate denoting an MTF value.

Explanation for reference numerals: 100, mobile terminal; 200, widescreen anamorphic lens; 210, cylindrical lens group; 220, spherical lens group;

P1, first lens; P2, second lens; P3, third lens; PM, inflection element; P4, fourth lens; P5, fifth lens; P6, sixth lens; P7, seventh lens;

1, object side surface of first lens; 2, image side surface of first lens; 3, object side surface of second lens; 4, image side surface of second lens; 5, image side surface of third lens; 6, light incident surface of inflection element; 7, light emergent surface of inflection element; 8, object side surface of fourth lens; 9, image side surface of fourth lens ; 10, diaphragm; 11, object side surface of fifth lens; 12, image side surface of fifth lens; 13, object side surface of sixth lens; 14, image side surface of sixth lens; 15, object side surface of seventh lens; 16, image side surface of seventh lens.

**DETAILED DESCRIPTION**

Technical solutions of the present invention will be described clearly and completely as follows in conjunction with the drawings, apparently, the described embodiments are just part rather than all embodiments of the present invention. Based on the embodiments in the present invention, all other embodiments obtained by one with ordinary skill in the art without delivering creative efforts shall fall into the protection scope of the present invention.

In the description of the present invention, it should be noted that, orientation or position relationships indicated by terms such as "centre", "upper", "lower", "left", "right", "vertical", "horizontal", "inner", "outer", etc. are orientation or position relationships indicated on the basis of the accompanying drawings, are only intended to facilitate description or simplified description of the present invention, rather than indicating or implying that the involved apparatus or element shall have specific orientations, or be configured and operated specifically, and therefore shall not be construed as limitations to the present invention. In addition, terms such as "first", "second", "third", which are merely intended to deliver description, can not be construed as indicating or implying relative importance.

In the description of the present invention, it should be noted that, unless specified and defined otherwise, the terms of "installation", "interconnection" and "connection" shall be understood in a broad sense, for example, a fixed connection, a removable connection, an integral connection, a mechanical connection, an electrical connection, a direct connection, an indirect connection via intermediate medium, or further, internal communication between two elements. Case-by-case interpretation can be made to the above terms in the present invention by one with ordinary skill in the art.

In addition, technical features involved in the described different implementations of the present invention can be combined with each other in the case of no contradictions.

## Embodiment 1

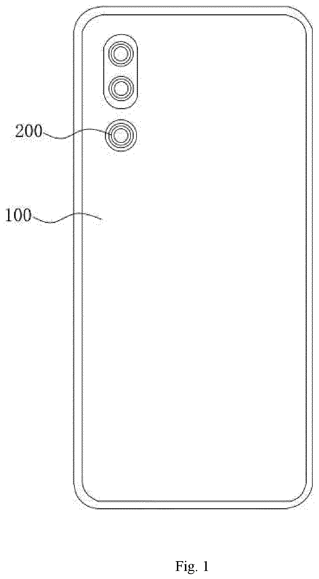

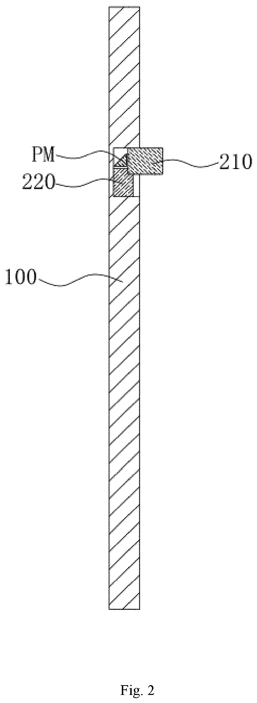

As shown in Fig. 1 and Fig. 2, a mobile terminal with a built-in anamorphic lens is illustrated, the mobile terminal 100 is equipped with a small widescreen anamorphic lens 200 which has the function of shooting squeezed and deformed images and can be installed on the mobile terminal as a built-in structure. For example, the mobile terminal 100 is provided with a groove for securing a lens module comprising a widescreen anamorphic lens as a whole in a built-in manner. In other implementations, the widescreen anamorphic lens comprising a widescreen anamorphic lens can also be connected to the mobile terminal through a rotation mechanism. The rotation mechanism can specifically be a rotation pin to which the lens module containing the widescreen anamorphic lens is rotatably connected. The lens module has at least one state of being built in the mobile terminal during the rotation. And the built-in of the lens module can be construed as all or part of the lens module extends into the mobile terminal, or after being installed on the mobile terminal, the lens module can not be removed from the mobile terminal by methods other than a damage approach, so as to be distinguished from a lens module installed as an external structure.

Regarding the widescreen anamorphic lens, the widescreen refers to that the aspect ratio of the shooting picture is larger than the aspect ratio 16:9 of the current HDTV screen, for example, the anamorphic lens that can take pictures with a aspect ratio of 2.7:1 is a widescreen anamorphic lens. The widescreen anamorphic lens has a deformation coefficient ranging from 1.33 to 2.0, and can be, for example, 1.33, 1.5, 1.8, 2.0, etc.

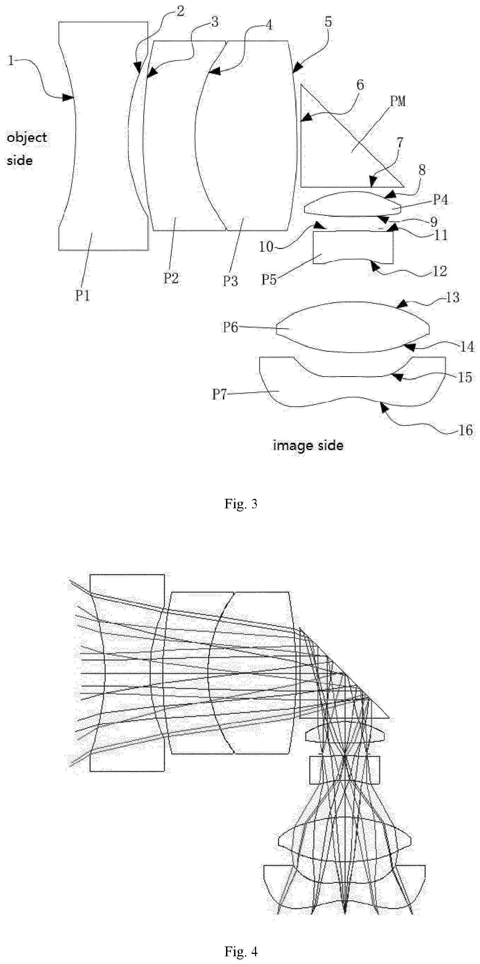

In conjunction with Fig. 3 and Fig. 4, in this embodiment, the widescreen anamorphic lens includes a cylindrical lens group 210, a spherical lens group 220, and an inflection element PM that are successively arranged from the object side to the image side, and the cylindrical lens group 210 at least includes a group of cylindrical negative optical power lenses and a group of cylindrical positive optical power lenses. The optical characteristics of the cylindrical lens group formed by at least a group of cylindrical negative optical power lenses and a group of cylindrical positive optical power lenses can be utilized to "compress" the incident light entering the cylindrical lens group 210 horizontally, while allowing the incident light entering the cylindrical lens group 210 vertically remain unchanged, therefore, the widescreen anamorphic lens can compress a widescreen image into a standard image area. After being deformed and corrected by the image correction module, the compressed picture taken by the widescreen anamorphic lens can be restored to obtain widescreen images and videos, meeting the needs of users for widescreen shooting by the mobile terminal.

The cylindrical lens is generally of a cylindrical or semi-cylindrical shape overall, which can be understood as a part taken from a cylindrical glass body that is cut longitudinally. The axis of the cylindrical lens is the axis of the cylindrical glass body, and the cylindrical lens includes a cylindrical face and a plane face; the cylindrical face of the cylindrical lens parallel to the axis is a parallel surface, and a circular face in the direction perpendicular to the axis. The direction in which the cylindrical lens is parallel to the axis is an axial meridian direction, and the direction in which the cylindrical lens is perpendicular to the axis is a refractive power meridian direction, and the cylindrical lens has different radii in the axial meridian direction and the refractive power meridian direction, and therefore has different magnification factors. According to this characteristic of the cylindrical lens, the incident light entering the cylindrical lens horizontally is compressed, and the incident light entering the cylindrical lens vertically remains unchanged, so wide pictures can be compressed to a standard picture area to be taken by the lens.

In this embodiment, the mobile terminal can be mobile electronic terminals such as mobile phones and tablet computers.

In this embodiment, the optical structural schematic diagram and light path diagram of the widescreen anamorphic lens are shown in Fig. 3 and Fig. 4, respectively. The widescreen anamorphic lens includes a cylindrical lens group 210, an inflection element PM, and a cylindrical lens group 220 arranged in sequence from the object side to the image side. The inflection element is located on a light path of incident light through the cylindrical lens group 210, for inflecting the incident light to the cylindrical lens group 220. A mechanical center line of the cylindrical lens group 210 is perpendicular to a mechanical center line of the spherical lens group 220. In other embodiments, the inflection element PM can also be located between combined multiple lens in the cylindrical lens group or between combined multiple lens in the spherical lens group.

In this embodiment, the cylindrical lens group is formed by three cylindrical lenses, the inflection element PM is any one of a flat mirror, a triangular prism or a pentagonal prism, and the cylindrical lens group is composed of four aspheric lenses. Images taken by the widescreen anamorphic lens in this arrangement has the visual effects of horizontal drawing and elliptical out-of-focus spots in addition to the horizontal compression and deformation effect of the picture. Horizontal drawing means that horizontally extending light is formed on the light source of a shot picture, and the thickness of the light is correlated with shooting distance, the intensity of a light source, and the deformation coefficient of the widescreen anamorphic lens. Of course, it can be understood that the number of cylindrical lenses that constitute the cylindrical lens group can also be four or more. The number of aspherical lenses constituting the spherical lens group can be more than four, as long as the cylindrical lenses constituting the cylindrical lens group can "compress" the incident light entering horizontally, while the incident light entering vertically remains unchanged. The spherical lens constituting the spherical lens group can comprehensively correct the incident light, thereby increasing the field of view during horizontal shooting by the lens, so that the actual aspect ratio of a shoot screen becomes larger, and widescreen video or photos can be obtained without sacrificing pixels.

In this embodiment, the cylindrical lens group comprises a first lens P1, a second lens P2 and a third lens P3 arranged in sequence from an object side to an image side along an optical axis; the first lens P1 and the second lens P2 are a cylindrical negative optical power lens, and the third lens P3 is a cylindrical positive optical power lens; and the spherical lens group comprises a fourth lens P4, a fifth lens P5, a sixth lens P6 and a seventh lens P7 arranged in sequence from the object side to the image side along the optical axis; and each of the fourth lens P4, the fifth lens P5, the sixth lens P6 and the seventh lens P7 is an even aspheric lens with a aspheric coefficient satisfying the following equation:

$$Z = cy^2/[1+\{1 - (1+k)c^2y^2\}^{+1/2}]+A_4y^4+A_6y^6+A_8y^8+A_{10}y^{10}$$

Wherein, Z is a aspheric vector height, c is a aspheric paraxial curvature, y is a lens aperture, k is a conic coefficient, A4 is a 4th power aspheric coefficient, A6 is a 6th power aspheric coefficient, and A8 is an 8th power aspheric coefficient, A10 is a 10th power aspheric coefficient.

In this embodiment, both of the object side surface and image side surface of the first lens P1 are concave near the optical axis, the object side surface of the second lens P2 is convex near the optical axis, and the image side surface of the second lens P2 is concave near the optical axis, the image side surface of the third lens P3 is convex near the optical axis. The included angle between the light incident surface of the inflection element PM and the mechanical center line of the third lens P3 is 45 degrees, the image side surface and object side surface of the fourth lens P4 are convex near the optical axis, thus the fourth lens P4 is a biconvex lens. The object side surface of the fifth lens P5 is concave near the optical axis; and the image side surface and the object side surface of the sixth lens P6 are convex near the optical axis, thus the sixth lens P6 is a biconvex lens; the object side surface of the seventh lens P7 is convex near the optical axis, and the image side surface of the seventh lens P7 is concave near the optical axis, and both its object side surface and image side surface have inflection points off-axis.

The widescreen anamorphic lens has a thickness of not more than 12mm. In this embodiment, the thickness of the cylindrical lens group along the optical axis is 5.50mm; the thickness of the cylindrical lens group along the optical axis is 5.20mm; the thickness of the inflection element PM along the optical axis is 2.40mm. The widescreen anamorphic lens has a relatively small size overall, and the mechanical center line of the cylindrical lens group is perpendicular to that of the spherical lens group, which can realize installation of the widescreen anamorphic lens on a mobile terminal with a small thickness in a built-in manner. Of course, the size of the cylindrical lens group, the cylindrical lens group and the inflection element PM can also be reduced appropriately.

The parameters of each lens in this embodiment are listed below:

| | Surface type | X_radius（mm） | Y_radius（mm） | thickness（mm） | glass |
|---|---|---|---|---|---|
| 1 | cylindrical aspheric (Toroidal Cylinder) | -5.6319 | inf | 1.2000 | 4875.704 |
| 2 | cylindrical aspheric | 4.2548 | inf | 0.3500 | |
| 3 | cylindrical (Standard Cylinder) | 10.1807 | inf | 1.200 | 8467.237 |
| 4 | cylindrical | 3.5438 | inf | 2.3500 | 9108.352 |
| 5 | cylindrical aspheric | -13.1972 | inf | 0.1000 | |
| 6 | Prism | Inf | inf | 2.400 | HK9L |
| 7 | | inf | inf | 0.1000 | |

(continued)

|  |  | Surface type | X_radius ( mm ) | Y_radius ( mm ) | thickness ( mm ) | glass |
|---|---|---|---|---|---|---|
|  | 8 | (Even Asphere) | 1.8974 | 1.8974 | 0.5781 | 4875.704 |
|  | 9 | aspheric | -6.9488 | -6.9488 | 0.2905 |  |
|  | 10 | Stop | Inf | Inf | 0.0500 |  |
|  | 11 | aspheric | 8.5199 | 8.5199 | 0.6503 | 7283.283 |
|  | 12 | aspheric | 1.8672 | 1.8672 | 1.0002 |  |
|  | 13 | aspheric | 3.2485 | 3.2485 | 1.1911 | 5917.606 |
|  | 14 | aspheric | -5.4226 | -5.4226 | 0.5586 |  |
|  | 15 | aspheric | 3.6029 | 3.6029 | 0.4811 | 5917.606 |
|  | 16 | aspheric | 1.2586 | 1.2586 | 0.4000 |  |

Cylindrical aspheric coefficient:

1, $K=-1.1411$, $A4=9.0e^{-4}$, $A6=6.37e^{-5}$, $A8=2.5772e^{-6}$, $A10=-7.20396e^{-7}$;
2, $K=-1.6136$, $A4=1.9e^{-3}$, $A6=2.00e^{-4}$, $A8=5.01650e^{-5}$, $A10=-6.30190e^{-6}$;
5, $K=-3.8613$, $A4=-3.0e^{-4}$, $A6=-1.00e^{-4}$, $A8=5.6852e^{-6}$;

Aspheric coefficient:

8, $K=-0.3923$, $A4=8.2e^{-3}$, $A6=4.00e^{-4}$, $A8=9.000e^{-4}$, $A10=-5.400e^{-3}$;
9, $K=4.9815$, $A4=1.87e^{-2}$, $A6=-5.1e^{-3}$, $A8=-1.07e^{-2}$, $A10=3.60e^{-3}$;
11, $K=-4.9919$, $A4=-3.18e^{-2}$, $A6=5.8e^{-3}$, $A8=-1.42e^{-2}$, $A10=1.27e^{-2}$;
12, $K=-2.511$, $A4=4.8448e^{-5}$, $A6=1.99e^{-2}$, $A8=-5.5e^{-3}$, $A10=7.5e^{-3}$;
13, $K=0.8828$, $A4=-9.1e^{-3}$ $A6=7.0e^{-4}$, $A8=-7.0e^{-4}$, $A10=4.0e^{-4}$;
14, $K=1.3393$, $A4=-4.1e^{-2}$, $A6=2.69e^{-2}$, $A8=-1.45e^{-2}$, $A10=2.8e^{-3}$;
15, $K=4.9988$, $A4=-3.671e^{-1}$, $A6=1.166e^{-1}$, $A8=-1.60e^{-2}$, $A10=-4.90e^{-3}$;
16, $K=-4.8512$, $A4=-1.256e^{-1}$, $A6=5.34e^{-2}$, $A8=-1.22e^{-2}$, $A10=7.0e^{-4}$;

Wherein, k is a conic coefficient, A4 is a 4th power aspheric coefficient, A6 is a 6th power aspheric coefficient, and A8 is an 8th power aspheric coefficient, A10 is a 10th power aspheric coefficient.

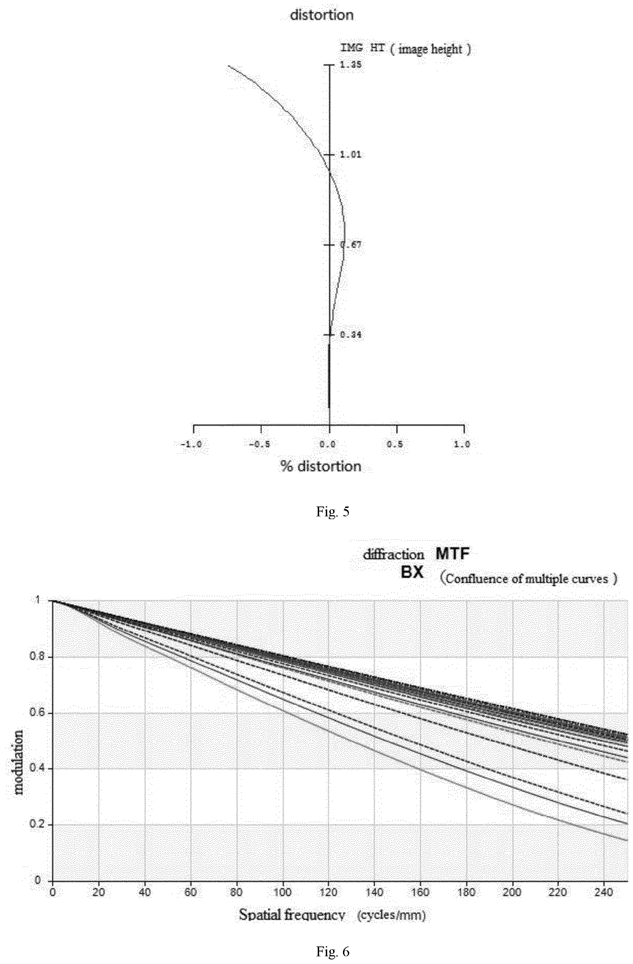

Fig. 5 is the optical distortion curve of the lens group in the embodiment 1; in Fig.3, the "img Ht" refers to image height; Fig. 6 shows the MTF (Modulation Transfer Function) transfer function curve (optical transfer function) of the lens group in the embodiment 1, which can comprehensively reflect the imaging quality of the system. The smoother the curve shape and the higher the curve is relative to the X axis, the better the imaging quality of the system proves to be, and the higher the definition of the lens.

Embodiment 2

Embodiment 2 merely differs from embodiment 1 in that, positions of the cylindrical lens group and the spherical lens group are interchanged. A spherical lens group formed by four aspheric lenses serves as the front lens group, and a cylindrical lens group formed by three cylindrical lenses serves as the rear lens group; images taken by the widescreen anamorphic lens with this structure still undergo squeezing and deformation, but the pictures taken lacks the visual effect of horizontal drawing and elliptical out-of-focus spots compared with those taken by the widescreen anamorphic lens structured as embodiment 1.

Embodiment 3

Embodiment differs from embodiment 1 in that, the widescreen anamorphic lens includes two cylindrical lens groups and one spherical lens group. The first cylindrical lens group, the spherical lens group, and the second cylindrical lens group are arranged in sequence from an object side to an image side along the optical axis. This arrangement of the widescreen anamorphic lens has the effect of horizontal compression and deformation of the picture, but also has the visual effects of horizontal drawing and elliptical out-of-focus spots, and the optical effects are the same as those in embodiment 1.

Obviously, the above-mentioned embodiments are only examples for a clear description, rather than a limitation on the implementation. For those of ordinary skill in the art, other changes or modifications in different forms can be made on the basis of the above description. It is unnecessary and impossible to exhaust all implementations. And the obvious changes or modifications derived from this still fall into the protection scope of the invention.

**Claims**

1. A mobile terminal with an inbuilt anamorphic lens, **characterized in that**, the mobile terminal is provided with a widescreen anamorphic lens which comprises a cylindrical lens group and a spherical lens group, the cylindrical lens group at least comprises a group of cylindrical negative optical power lenses and a group of cylindrical positive optical power lenses.

2. The mobile terminal with an inbuilt anamorphic lens of claim 1, **characterized in that**, the cylindrical lens group and the spherical lens group are arranged in sequence from an object side to an image side along an optical axis.

3. The mobile terminal with an inbuilt anamorphic lens of claim 1 or 2, **characterized in that**,
the cylindrical lens group comprises a first lens, a second lens and a third lens arranged in sequence from an object side to an image side along an optical axis; the first lens and the second lens are a cylindrical negative optical power lens, and the third lens is a cylindrical positive optical power lens.

4. The mobile terminal with an inbuilt anamorphic lens of claim 1 or 2, **characterized in that**, the spherical lens group comprises at least four aspherical lenses.

5. The mobile terminal with an inbuilt anamorphic lens of claim 4, **characterized in that**, the spherical lens group comprises a fourth lens, a fifth lens, a sixth lens and a seventh lens arranged in sequence from the object side to the image side along the optical axis; and each of the fourth lens, the fifth lens, the sixth lens and the seventh lens is an even aspheric lens.

6. The mobile terminal with an inbuilt anamorphic lens of claim 2, **characterized in that**, an inflection element is provided between the cylindrical lens group and the spherical lens group, and located on a light path of incident light through the cylindrical lens group, for inflecting the incident light to the spherical lens group.

7. The mobile terminal with an inbuilt anamorphic lens of claim 6, **characterized in that**, a mechanical center line of the cylindrical lens group is perpendicular to a mechanical center line of the spherical lens group.

8. The mobile terminal with an inbuilt anamorphic lens of claim 6, **characterized in that**, the inflection element is a triangular prism, a flat mirror or a pentagonal prism.

9. The mobile terminal with an inbuilt anamorphic lens of claim 1, **characterized in that**, the widescreen anamorphic lens has a deformation coefficient ranging from 1.33 to 2.0.

10. The mobile terminal with an inbuilt anamorphic lens of claim 1, **characterized in that**, the widescreen anamorphic lens has a thickness of not more than 12mm

11. The mobile terminal with an inbuilt anamorphic lens of claim 1, **characterized in that**, the widescreen anamorphic lens is built in the mobile terminal.

12. The mobile terminal with an inbuilt anamorphic lens of claim 1, **characterized in that**, the mobile terminal is a mobile phone or a tablet.

Fig. 1

PM

220

210

100

Fig. 2

object side

1

2

3

4

5

6

PM

7

8

P4

9

11

10

P5

12

13

P6

14

15

P7

16

P1

P2

P3

image side

Fig. 3

Fig. 4

distortion

Fig. 5

diffraction **MTF**
**BX** （Confluence of multiple curves）

Fig. 6

## INTERNATIONAL SEARCH REPORT

International application No.

**PCT/CN2020/120801**

| A. | CLASSIFICATION OF SUBJECT MATTER |
|---|---|

H04N 5/225(2006.01)i;  G02B 13/08(2006.01)i

According to International Patent Classification (IPC) or to both national classification and IPC

| B. | FIELDS SEARCHED |
|---|---|

Minimum documentation searched (classification system followed by classification symbols)

H04N; G02B

Documentation searched other than minimum documentation to the extent that such documents are included in the fields searched

Electronic data base consulted during the international search (name of data base and, where practicable, search terms used)

GBTXT; CATXT; SGTXT; ATTXT; EPTXT; DWPI; LEXTXT; USTXT; CHTXT; WOTXT; CNABS; CNTXT: 凹, 凸, 正光焦度, 正, 负光焦度, 宽荧幕, 屈折, 变形, 柱面, 变形透镜, 潜望, 透镜, 球面, 反射, 广东思锐光学, 棱镜, 屈, 负, 宽, 折射, reflect, mobile, cylind+, periscopic, fold, mirror, spheri+, anamorphic, lens, deform+,

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110716290 A (GUANGDONG SIRUI OPTICAL CO., LTD.) 21 January 2020 (2020-01-21) <br> claim 1, description, paragraphs 0073-0074, 12 in the Figure 1 | 1-12 |
| X | CN 211123457 U (GUANGDONG SIRUI OPTICAL CO., LTD.) 28 July 2020 (2020-07-28) <br> claim 1, description, paragraphs 0031, 0044, 12 in the Figure 1 | 1-12 |
| X | CN 210835410 U (GUANGDONG SIRUI OPTICAL CO., LTD.) 23 June 2020 (2020-06-23) <br> description paragraphs 0050, 0051, 0070, 0071 | 1-12 |
| PX | CN 212305404 U (GUANGDONG SIRUI OPTICAL CO., LTD.) 05 January 2021 (2021-01-05) <br> description paragraphs 0043-0047 | 1-12 |
| X | CN 1160215 A (SAMSUNG AEROOSPACE INDUSTRIES, LTD.) 24 September 1997 (1997-09-24) <br> description page 2 lines 23-29, page 4 lines 9-15 | 1-12 |
| A | CN 101943791 A (SONY CORPORATION) 12 January 2011 (2011-01-12) <br> description paragraphs 0166-0168 | 6-8 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2021** | **10 May 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/120801** |

**C.    DOCUMENTS CONSIDERED TO BE RELEVANT**

| Category* | Citation of document, with indication, where appropriate, of the relevant passages | Relevant to claim No. |
|---|---|---|
| X | CN 108700799 A (PANAVISION INT L P) 23 October 2018 (2018-10-23) description paragraphs 0019-0020, 0039 | 1-12 |
| X | WO 2016094842 A1 (PANAVISION INT LP) 16 June 2016 (2016-06-16) description, paragraphs 0027-0032 | 1-12 |
| X | US 6512636 B2 (JOSEF SCHNEIDER OPTISCHE WERKE) 28 January 2003 (2003-01-28) description, columns 2-3 | 1-12 |
| X | US 2019250415 A1 (PANAVISION INT L P) 15 August 2019 (2019-08-15) description paragraphs 0073-0080 | 1-12 |
| X | EP 0911666 A2 (TEXAS INSTRUMENTS INC.) 28 April 1999 (1999-04-28) description, paragraphs 0022-0025 | 1-12 |

Form PCT/ISA/210 (second sheet) (January 2015)

**INTERNATIONAL SEARCH REPORT**
Information on patent family members

International application No.

**PCT/CN2020/120801**

| Patent document cited in search report | | | Publication date (day/month/year) | Patent family member(s) | | | Publication date (day/month/year) |
|---|---|---|---|---|---|---|---|
| CN | 110716290 | A | 21 January 2020 | US | 10838171 | B1 | 17 November 2020 |
| CN | 211123457 | U | 28 July 2020 | None | | | |
| CN | 210835410 | U | 23 June 2020 | None | | | |
| CN | 212305404 | U | 05 January 2021 | None | | | |
| CN | 1160215 | A | 24 September 1997 | JP | 3952092 | B2 | 01 August 2007 |
| | | | | KR | 100388917 | B1 | 19 September 2003 |
| | | | | KR | 970048668 | A | 29 July 1997 |
| | | | | JP | H09179004 | A | 11 July 1997 |
| | | | | US | 5731908 | A | 24 March 1998 |
| | | | | DE | 19650724 | A1 | 12 June 1997 |
| CN | 101943791 | A | 12 January 2011 | JP | 2011013583 | A | 20 January 2011 |
| | | | | US | 2011002043 | A1 | 06 January 2011 |
| | | | | US | 8169713 | B2 | 01 May 2012 |
| CN | 108700799 | A | 23 October 2018 | AU | 2016384664 | A1 | 12 July 2018 |
| | | | | CA | 3010017 | A1 | 13 July 2017 |
| | | | | US | 2017192210 | A1 | 06 July 2017 |
| | | | | EP | 3400487 | A1 | 14 November 2018 |
| | | | | JP | 2019501422 | A | 17 January 2019 |
| | | | | WO | 2017120116 | A1 | 13 July 2017 |
| | | | | US | 10551598 | B2 | 04 February 2020 |
| | | | | US | 2020348494 | A1 | 05 November 2020 |
| WO | 2016094842 | A1 | 16 June 2016 | US | 10054761 | B2 | 21 August 2018 |
| | | | | EP | 3230781 | A1 | 18 October 2017 |
| | | | | JP | 2018503861 | A | 08 February 2018 |
| | | | | AU | 2015360287 | A1 | 06 July 2017 |
| | | | | US | 10502927 | B2 | 10 December 2019 |
| | | | | CA | 2970654 | A1 | 16 June 2016 |
| | | | | US | 2019094488 | A1 | 28 March 2019 |
| | | | | US | 2020292782 | A1 | 17 September 2020 |
| | | | | US | 2016170173 | A1 | 16 June 2016 |
| US | 6512636 | B2 | 28 January 2003 | US | 2002118466 | A1 | 29 August 2002 |
| | | | | DE | 10060072 | A1 | 06 June 2002 |
| US | 2019250415 | A1 | 15 August 2019 | WO | 2019157474 | A1 | 15 August 2019 |
| | | | | TW | 201940920 | A | 16 October 2019 |
| | | | | CN | 112352183 | A | 09 February 2021 |
| | | | | CA | 3091130 | A1 | 15 August 2019 |
| | | | | US | 2020096777 | A1 | 26 March 2020 |
| | | | | AU | 2019218371 | A1 | 03 September 2020 |
| | | | | EP | 3752878 | A1 | 23 December 2020 |
| | | | | US | 10401634 | B1 | 03 September 2019 |
| EP | 0911666 | A2 | 28 April 1999 | US | 5930050 | A | 27 July 1999 |
| | | | | EP | 0911666 | A3 | 22 September 1999 |

Form PCT/ISA/210 (patent family annex) (January 2015)